# EUROPEAN PATENT APPLICATION

(11) **EP 2 147 757 A1**
(43) Date of publication of application: **27.01.2010**
(21) Application number: 09164836.0
(22) Date of filing: 07.07.2009
(51) Int. Cl.: B25J 9/16, G05D 1/02

(54) **A robotic system with simulation and mission partitions**

(30) Priority: 21.07.2008 US 176730
(71) Applicant: Honeywell International Inc., Morristown, NJ 07962 (US)
(72) Inventor: Fletcher, Mitch, Morristown, NJ 07962-2245 (US); Black, Randy, Morristown, NJ 07962-2245 (US)
(74) Representative: Buckley, Guy Julian

(57) **Abstract**

A robot for accomplishing a mission in a physical environment includes a body; and an operating system coupled to the body and configured to operate the body. The operating system is divided into a plurality of partitions, which includes a simulation partition configured to receive inputs and simulate the mission in a simulated environment corresponding to the physical environment based on the inputs to produce a simulated result, and a mission partition configured to receive the simulated result and determine actions to accomplish the mission based on the simulated result.

## Description

### TECHNICAL FIELD

The present invention generally relates to robots and robotic systems, and more particularly relates to robots and robotic systems with simulation and mission partitions.

### BACKGROUND

NASA initiatives for space exploration include the development of programs such as the Space Exploration Vision and Project Constellation programs. Aspects of these programs include lunar or extra-planetary base concepts and operations, including precursor missions to the Moon and Mars. Achieving the initiatives of NASA will require significant support from robotic systems with varied functions such as rendezvous and docking, in-space assembly, in situ mining and refining, and mobile astronaut assistants.

Commercial robotic systems can include dozens or hundreds of robots operating simultaneously controlled by large banks of computer control systems. Space robotics have been limited to a one robot at a time philosophy. A team of several individuals can be required for each spacebased robot. For example, the Mars Exploration Rovers require a staff of approximately 47 people to support continual operation of a single robotic rover. While this has been sufficient for prior space based robotic missions, economic realities and increasing levels of system complexities render this approach difficult for future NASA and commercial space missions.. Increased autonomy, with the attendant decrease in required operator interaction, can provide advantages. However, increased autonomy can increase financial and time costs as the robots are individually designed for a specific mission. Moreover, increased autonomy tends to decrease the reliability of the system, as well as increase the risk of mission failure, equipment damage, and/or the like. Additionally, many missions require simulations in virtual environments to ensure mission success and human and equipment safety. These simulations typically occur at the home command center and can produce extensive time delays, and can consume processing and communications resources.

Accordingly, it is desirable to provide improved robots and robotics systems that can be implemented at a lower cost, require less human interaction, and provide quicker, more efficient missions. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, a robot for accomplishing a mission in a physical environment includes a body; and an operating system coupled to the body and configured to operate the body. The operating system is divided into a plurality of partitions, which includes a simulation partition configured to receive inputs and simulate the mission in a simulated environment corresponding to the physical environment based on the inputs to produce a simulated result, and a mission partition configured to receive the simulated result and determine actions to accomplish the mission based on the simulated result.

In accordance with another exemplary embodiment, a robotic system for performing a mission in a physical environment includes a first robot comprising a first body and a first operating system coupled to the first body and configured to operate the first body; a second robot comprising a second body and a second operating system coupled to the second body and configured to operate the second body; and a virtual backplane coupling the first and second operating systems such that the first and second operating systems form a simulation partition configured to receive inputs and simulate the mission in a simulated environment corresponding to the physical environment based on the inputs to produce a simulated result, and a mission partition configured to receive the simulated result and determine actions to accomplish the mission based on the simulated result.

In accordance with yet another exemplary embodiment, a method of completing a function with a robot includes gathering data with a sensor provided on the robot; simulating the function with a simulation partition on the robot based on the data to produce a simulated result; and performing the function based on the simulated result.

### BRIEF DESCRIPTION OF THE DRAWINGS

The present invention will hereinafter be described in conjunction with the following drawing figures, wherein like numerals denote like elements, and

FIG. 1 is a schematic representation of a robotic system in accordance with an exemplary embodiment;

FIG. 2 is a schematic representation of an exemplary software infrastructure of a robot of the robotic system of FIG. 1; and

FIG. 3 is a flow chart depicting one exemplary method of operating a robot of the robotic system of FIG. 1.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Broadly, exemplary embodiments described herein include a robot with simulation and mission, software operating partitions. The simulation partition enables a simulation of a mission task concurrent to or prior to the determination of the real-time action by the mission partition. As such, this solution provides improved robots and robotics systems that can be provided with lower costs, faster mission operations, and increased autonomy.

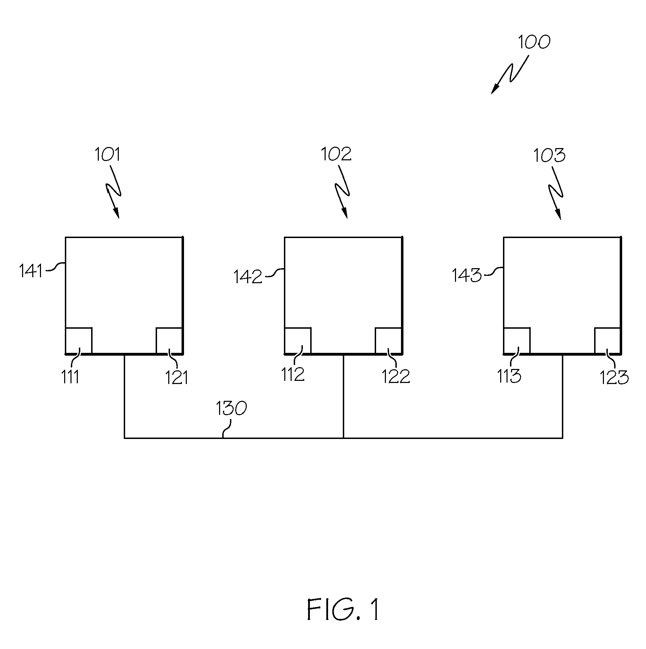

FIG. 1 is a schematic representation of a robotic system 100 in accordance with an exemplary embodiment. The robotic system 100 can include one or more robots 101, 102, 103. The robots 101-103 can include one or more effectors 111, 112, 113 and one or more sensors 121, 122, 123 housed in a body 141, 142, 143. The effectors 111-113 can include, but are not limited to, actuators for controlling the robots 101-103, such as wheel drives, and actuators for performing designated mission functions, such as arms. Other types of effectors 111-113 can include sensor actuators, grappling devices, docking mechanisms, soil and environment manipulators, astronaut assistance devices, antenna pointing systems, motor drives, thrusters, momentum control devices such as reaction wheels and control moment gyroscopes, solenoids, power control, and/or similar components. The types of sensors 121-123 can include guidance, navigation and control sensors and/or mission specific sensors. Other exemplary types of sensors 121-123 may include cameras, sonar, radar, lidar, pressure, temperature, accelerometers, inertial measurement units, ring laser gyroscopes, strain gages, chemical composition detectors, spectrographs, imaging, radiation detectors, proximity detectors, soil analyzers, and/or similar sensors. The robots 101-103 can be coupled together wirelessly with a virtual backplane 130, which is discussed in greater detail below. The effectors 111-113, sensors 121-123, and body 141-143 are typically adapted for Earth-based and/or extraterrestrial missions.

Each robot 101-103 can additionally include one or more hardware components, such as processing components, I/O components, and physical backplanes for receiving and providing inputs to and from sensors 111-113 and effectors 121-123 and otherwise accomplishing a mission function, either as individual robots or as a system.

As noted above, each robot 101-103 can be coupled to the other robots 101-103 by the virtual backplane 130. The virtual backplane 130 represents the virtual communications interface between the robots 101-103. The virtual backplane 130 can include a high-speed data bus or wireless data bus and enable all the data of the system 100 to be available to each of the robots 101-103, regardless of the origin or physical location of the data. This allows the robots 101-103 to be independent of the software applications of the entire robotic system 100, thus allowing a more simplistic implementation. The virtual backplane 130 additionally enables the system 100 to implement the modular architecture across many robots 101-103. The virtual backplane 130 and the resulting accessibility of all data to all robots 101-103 enables the robots 101-103 to be optimally sized to reduce weight and to allow local thermal issues to be considered in the architectural implementation. Additional robots can be added for extended availability, increased redundancy, and/or increased processing and I/O capabilities.

The virtual backplane 130 can be a deterministic wireless virtual backplane and include a deterministic wireless communication scheme, such as a Time Division Multiple Access (TDMA) at the Media Access Control layer of wireless protocols, such as the Zigbee (802.15.4) protocol and WiFi (802.11) protocols. As noted above, an interface for the respective robot 101-103 can access any data within the system 100. Any data that is transferred within the system 100, either within a robot 101-103 or between robots 101-103, is placed on the virtual backplane 130. The interfaces can determine whether the data is applicable to the respective robot 101-103, and read and store only that data on the robot 101-103. In an alternate embodiment, the virtual backplane 130 can place all data in all robots 101-103.

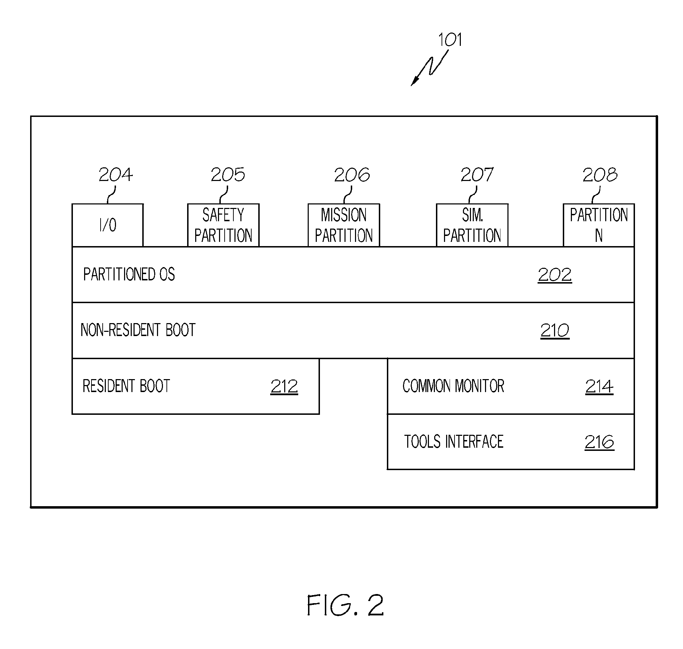

FIG. 2 is a schematic representation of an exemplary software infrastructure of a robot 101. The robot 101 can be, as an example, one of the robots of the robotic system 100 of FIG. 1.

The robot 101 includes an operating system 202 partitioned into a number of partitions 204-208. Although the individual partitions 204-208 are discussed in greater detail below, generally, the partitions 204-208 can appear to the overall robotic system 100 to be separate computing elements, such as individual virtual computers. Each partition 204-208 can execute programs to provide different functionalities within the system. Each partition 204-208 can include memory, processing, and I/O subcomponents, and each processing subcomponent is operable to indicate what data the I/O subcomponent should place on the virtual backplane 130, when to place the data on to the virtual backplane 130, and the rate to place the data on the virtual backplane 130. In addition, each processing subcomponent is operable to instruct the I/O subcomponents when to retrieve data from the virtual backplane and what data to retrieve.

The operating system 202 can include an OS Application Programming Interface (API), memory management, application fault response protocols, and time management features. In one embodiment, the operating system 404 can adhere to the time and space partitioning protocol defined in ARINC-653 (Avionics Application Standard Software Interface) or other partitioned operating systems such as the Honeywell DEOS®. The operating system 202 can allocate a pre-defined set of memory resources for each partition 204-208. A hardware-based Memory Management Unit (MMU) can enforce access rights to the memory resources to ensure that the memory resources of the partitions 204-208, including stack and scratch areas, are protected from access by other partitions 204-208, and that software and/or memory failures do not propagate to other partitions running on the same robot 101. Temporary storage locations such as program registers can be automatically stored by the software infrastructure when a context switch occurs. Each partition 204-208 can perform the typical functions associated with complex applications, such as interaction between multiple processes, threading, and executing processes at differing cyclic rates.

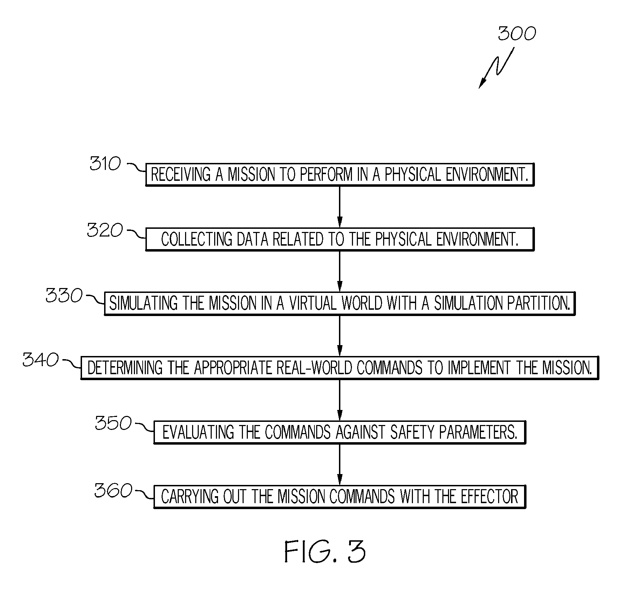

Generally, the partitions 204-208 include an I/O partition 204, a safety partition 205, a mission partition 206, a simulation partition 207, and any other necessary or desired partition 208. The simulation partition 207 receives inputs and simulates a mission function in a simulation that mirrors the physical environment of the robot 101. The mission partition 206 then receives the simulated results from the simulation partition 207, and determines the proper real-world actions to accomplish the mission. These actions are then provided to the effectors (e.g., effectors 121-123; FIG. 1) to carry out the mission function. The results of simulated and/or real-world actions can be evaluated by the safety partition 203 to ensure that the actions comply with safety parameters. The safety, mission, and simulation partitions 205, 206, 207 are discussed in further detail below with reference to FIG. 3.

The simulation partition 207 is a complete simulated representation of the environment and the physical "world" that the robot(s) 101-103 exist within as an aviator. As one example, within the simulated world it is possible to embed simulated keep out zones representation possible craters on the physical surface. It is also possible to embed a real time avatar astronaut whose position could be fed through RFID of other techniques. The simulation partition 207 allows these simulated environments to be rules for the robot 101-103 to act upon. All activity of the robot 101-103 may be accomplished in the simulation partition 207. Such a partition contains the guidance, navigation, and control algorithm for the robot 101-103.

The mission partition 206 calculates the operation of the effectors 111-113 based upon information passed to it from the simulation partition 207. The mission partition 206 may include software designed for a number of different missions such as mining, maintenance, astronaut follower, or other useful mission operation.

The safety partition 205 can include built-in test equipment (BITE) component 410 that functions for continuous BITE, status generation, maintenance interface, and fault server, as well as an OS API to interact with the operating system 202. The I/O partition 204 can include an IEEE 1394 interface, an MIL-STD 1553 interface, an Ethernet interface, analog I/O, discrete I/O, and/or a RS-422 interfaces well as an OS API to interact with the operating system 202. The I/O partition 204 may house all of the I/O drivers and assures that the I/O data is moved to and from partitions according to pre-defined table entries. Alternately, I/O partition 204 may be implemented by a plurality of partitions.

Other infrastructure components of the robot 101 can include a non-resident boot component 210, a resident boot component 212, a common monitor component 214, and a tools interface component 216. The non-resident boot component 414 can include a hardware abstraction layer (HAL-2), non-resident boot initialization, power-up boot (POST), phantom fault response, software loader, platform load verification, module load verification, and cabinet initialization. The resident boot component 212 can include boot initialization, and a hardware abstraction layer (HAL-1). The common monitor component 214 can include a system monitor and/or a debug interface. The tools interface component 216 can include a partition monitor and/or a debug interface.

As noted above, the partitions 204-208 within the robot 101 can be seamless. In highly reliable systems, no partition 204-208 can contaminate the code, I/O, or data storage areas of another partition; consume the shared processor resources to the exclusion of any other application; consume I/O resources to the exclusion of any other application; or cause adverse affects to any other application as a result of a hardware or software failure unique to that partition. The architecture of the robot 101 can enhance the overall processing platform reliability. A fault in an individual hardware element affects only the partition 204-208 associated with that element. A partition 204-208 running on a single processor can be modified without requiring re-certification of other partitions 204-208 running on the same processor. Thus, partitions 204-208 that are subject to frequent modifications may be co-resident with relatively stable partitions without requiring superfluous reverifications. Likewise, partitions 204-208 with mixed criticality levels may be co-resident without requiring all partitions to be certified to the highest criticality level.

Associated with the modular nature of the architecture, a layered approach to the hardware and software of system 100 can minimize the effect of system changes on user applications to provide a continuous spectrum of support ranging from direct interfaces between hardware components to application program interfaces accessed directly by user applications. Layering the architecture can simplify the impact of the future modifications or upgrades inevitably associated with human space applications and long life systems. The impacts of hardware changes due to obsolescence are typically dealt with at the hardware interface or middleware layers, while applications are often unaffected by these changes.

Although FIG. 2 depicts the partitions 204-208 on a single robot 101, in an alternate embodiment, all or a portion of the partitions 204-208 can be located on other robots 102, 103 of the robotic system 100 or even outside of the robotic system 100 and coupled together with the virtual backplane 130. Any of the elements required for processing the data from any sensor 111-113 and providing the commands to any effector 121-123 can be provided by any partition within the system 100.

FIG. 3 is a flow chart depicting one exemplary method 300 of operating a robot such as robot 101 and is described with reference to FIGS. 1 and 2. In a first step 310, the robot 101 receives a mission to perform in a physical environment. The mission can be a task of a larger mission or a number of related tasks. Furthermore, the mission can only involve the single robot 101 or a number of robots 101-103 in the larger robotic system 100. The mission can include real-time commands from human operators, planned and scheduled mission tasks, real-time response to environmental conditions while achieving mission goals, and the like. As one example, the mission can be to travel from one position to another.

In step 320, a sensor 111 can collect data related to the physical environment. The sensor data can indicate, for example, an obstacle in an intended path of the robot 101.

In step 330, the simulation partition 207 receives the sensor data and simulates the mission in a virtual world. The "world" of the simulation partition 207 mirrors the physical environment and can be, for example, a local area, a room, a planet, or an otherwise defined physical parameter. In the virtual world, the robot 101 is represented by an avatar and performs the mission based on the mission commands and the sensor data. In the previously discussed example, the simulation partition 207 determines an acceptable path around the obstacle indicated by the sensor data based known and simulated aspects of the physical environment.

In step 340, the mission partition 206 receives the results of simulated mission and determines the appropriate real-world commands for the effectors to implement the mission. In step 350, the safety partition 205 receives these commands and evaluates the commands against safety parameters. The safety parameters can be related to government or industry regulations or aspects of equipment or human safety. Any command that does not comply with the safety parameters may be subsumed or suppressed. In this case, the system 100 may wait for further instructions or autonomously determine an alternate course of action. In the previously discussed example, the safety partition 205 will review the command to ensure that the path will not damage the robot 101 or an astronaut. In step 350, if the commands comply with the safety parameters, the commands are sent to the effectors to carry out the mission, and the mission is completed. In this example, the commands will be sent to the effector 121, such as a wheel drive, to execute the mission.

The robots 101-103 and robotic system 100 according to exemplary embodiments can realize the improved safety requirements while additionally lowering their cost of operation for the NASA space exploration vision. Particularly, the exemplary embodiments can autonomously accomplish mission functions without requiring the delay and costs of command center simulations.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A robot (101) for accomplishing a mission in a physical environment, comprising:
a body (141); and
an operating system (202) coupled to the body (141) and configured to operate the body (141), the operating system (202) divided into a plurality of partitions (204-208), including
a simulation partition (207) configured to receive inputs and simulate the mission in a simulated environment corresponding to the physical environment based on the inputs to produce a simulated result, and
a mission partition (206) configured to receive the simulated result and determine actions to accomplish the mission based on the simulated result.

2. The robot (101) of claim 1, further comprising a sensor (111-113) coupled to the body (141) and configured to produce the inputs provided to the simulation partition (207).

3. The robot (101) of claim 1, further comprising an effector (121-123) coupled to the body (141) and configured to perform the actions from the mission partition (206).

4. The robot (101) of claim 1, wherein the body (141) is adapted to an extraterrestrial physical environment.

5. The robot (101) of claim 1, wherein the plurality of partitions (204-208) includes an I/O partition (204).

6. The robot (101) of claim 5, further comprising
a sensor (111-113) coupled to the body (141) and configured to produce the inputs provided to the simulation partition (207); and
an effector (121-123) coupled to the body (141) and configured to perform the actions from the mission partition (206),
the I/O partition (204) driving the sensor (111-113) and effector (121-123).

7. The robot (101) of claim 1, wherein the operating system (202) is time and space partitioned.

8. The robot (101) of claim 1, wherein the plurality of partitions (204-208) includes a safety partition (205) configured to receive and review the actions to ensure that the actions comply with safety parameters.

9. The robot (101) of claim 1, wherein the operating system (202) operates in accordance with ARINC-653.

10. The robot (101) of claim 1, wherein the simulation and mission partitions (207, 206) are generally autonomous.
